Europäisches Patentamt

European Patent Office

Office européen des brevets

(19)

(11) Veröffentlichungsnummer: **0 353 685**
**A2**

(12) **EUROPÄISCHE PATENTANMELDUNG**

(21) Anmeldenummer: 89114090.7

(22) Anmeldetag: 31.07.89

(51) Int. Cl.⁴: **B62B 7/02**

(30) Priorität: 03.08.88 DE 3826381
08.06.89 DE 8907036 U

(43) Veröffentlichungstag der Anmeldung:
07.02.90 Patentblatt 90/06

(84) Benannte Vertragsstaaten:
**AT BE CH DE ES FR GB IT LI NL**

(71) Anmelder: **Solbach, Hartmut**
**Holbeinweg 15**
**D-6045 Rodgau 1(DE)**

(72) Erfinder: **Solbach, Hartmut**
**Holbeinweg 15**
**D-6045 Rodgau 1(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**D-6450 Hanau 7(DE)**

(54) **Kinderwagen.**

(57) Der Kinderwagen besteht aus einem mit einer Radachse versehenen Fahrgestell (1), an dem ein Sitz mit einer seitlich von Armstützen und einer Rückenlehne begrenzten Sitzfläche und eine Fußstütze sowie fußstützenseitig eine Deichsel (6) angeordnet sind. Nach der Erfindung ist die stab- oder bügelförmige Deichsel (6) des Fahrgestelles (1) sowohl unter der Sitz- als auch der Fußstützenauflagefläche (3, 5; 35, 36) herauslaufend und zugseitig vor der Fußstützfläche (5, 36) nach oben zum Handführungsgriff (6') abgewinkelt ausgebildet. Das Fahrgestell (1) ist in sich direkt federnd ausgebildet oder mit abgefederten Teilen unterhalb der Sitzfläche (3, 11) versehen, an denen die Räder (32) drehbar gelagert sind.

EP 0 353 685 A2

## Kinderwagen

Die Erfindung betrifft einen Kinderwagen der im Oberbegriff des Anspruchs 1 angegebenen Gattung.

Ein derartiger Kinderwagen ist nach der DE-A -34 34 502 bekannt. Dieser bekannte Kinderwagen hat die Form eines einachsigen, zweirädrigen Handwagens, wobei auf der Radachse eine Sitzschale mit Seitenwänden und Rückenlehne angeordnet ist und wobei ferner an der Radachse eine mittig befestigte Stangendeichsel mit Quergriffen sitzt. Da einerseits die Radachse unmittelbar an der Sitzschale und andererseits die Stangendeichsel an der Radachse befestigt ist läuft die Stangendeichsel unmittelbar unter der Sitzfläche heraus, so daß für die zweiteilige Fußstütze Platz nur beidseitig neben der Deichsel zur Verfügung steht. Die Unterschenkel des im Wagen sitzenden Kindes müssen also beidseitig neben der Deichsel Platz finden, was andererseits bedeutet, daß die Deichsel beim Besteigen oder Verlassen des Wagens durch das Kleinkind hinderlich im Wege steht. Da Kinderwagen der gattungsgemäßen Art insbesondere für Kleinkinder bestimmt sind, die schon laufen können, führt diese Deichselanordnung nahezu unverhinderbar zu Stürzen, wenn man das Besteigen oder Verlassen des Wagens dem Kind selbst überläßt. Diesbezüglich noch unpraktischer und auch aufwendiger in der Bauweise ist ein Kinderwagen nach dem DE-U- 74 38 006, der sich zudem insofern von dem Wagen der gattungsgemäßen Art unterscheidet als hierbei die Deichsel hinter der Rückenlehne angeordnet ist. Eine solche Deichselanordnung liegt auch bei einem Kinderwagen nach dem DE-U -76 07 249 vor. Abgesehen von der behindernden Deichselanordnung im ersten Fall, der aufwendigen Bauweise im zweiten Fall und der hochbockigen Anordnung des Fahrgestelles im dritten Fall weisen diese bekannten einachsigen Kinderwagen keinerlei Federungskomfort auf. Wollte man diese bekannten Kinderwagen mit Federungen versehen, so würde dies den Fertigungs - und Montageaufwand nicht unbeträchtlich erhöhen, ganz abgesehen davon, dar dafür die Fahrgestelle oder die Radachse bzw. Radlagerungen eine andere Konstruktion erhalten müßten. Da solche einachsigen Kinderwagen im Gegensatz zu zweiachsigen Kinderwagen besonders "geländegängig" sind, wäre aber zumindest ein gewisser Federungskomfort wünschenswert und vorteilhaft

Ein solcher einfacher Federungskomfort ist zwar bei einem Kinderwagen nach dem DE-U -69 38 266 vorhanden, weil hierbei der sattelartige Sitz auf dem freien Schenkel eines u-förmigen Bügels angeordnet ist. Dieser Wagen hat aber weder Armstützen noch eine Rückenlehne, sondern zusteigseitig eine Art Lenkstangenholm mit Handgriffen und zwei Fußrasten am unteren Ende. Von einem Kleinkind kann dieser Wagen praktisch nicht bestiegen oder verlassen werden, da dem der einzig vorhandene und zur Radachse mittig angeordnete u-förmige Bügel mit dem Lenkstangenholm entgegensteht.

Der Erfindung liegt demgemäß die Aufgabe zugrunde, einen Kinderwagen der eingangs angegebenen Gattung dahingehend zu verbessern, dar bei einfacher Ausbildung und Fertigung des Wagens an diesem die Voraussetzung geschaffen sein soll, daß der Sitz-und Fußstützenbereich von der Deichsel unbehindert trotz deren sitzseitiger Anordnung benutzbar sein und daß dieser trotz einfacher Ausbildung einen gewissen Federungskomfort aufweisen soll. Diese Aufgabe ist mit einem Kinderwagen der eingangs genannten Art nach der Erfindung durch die im Kennzeichen des Hauptanspruches angeführten Merkmale gelöst. Vorteilhafte Weiterbildungen ergeben sich nach den Unteransprüchen.

Diese erfindungsgemäße Ausbildung des Kinderwagens schließt die Sturzgefahr für ein Kleinkind vollkommen aus und bietet gerade bei einem solchen besonders "geländegängigen" Wagen (da gezogen und nicht geschoben) mit einfachen Mitteln einen ausreichenden Federungskomfort, der noch näher erläutert wird.

Es zeigt:

Fig. 1 den Kinderwagen nach der ersten Lösung in perspektivischer Darstellung;

Fig. 2 in Seitenansicht den Rohrzug des Kinderwagens gemäß Fig. 1;

Fig. 3 in Seitenansicht den Kinderwagen gemäß Fig. 1 mit einer anderen Ausführungsform der Rückenlehne und der Sitzfläche;

Fig. 4 in Seitenansicht den Kinderwagen in einer weiteren Ausführungsform;

Fig. 5 im Schnitt das Grundprinzip der Befestigung von Schalenformen an Rohren;

Fig. 6 in Seitenansicht den Kinderwagen in einer anderen Ausführungsform;

Fig. 7 in Vorderansicht den Kinderwagen gemäß Fig. 6;

Fig. 8 den Kinderwagen gemäß Fig. 6, 7 in Ansicht von unten und

Fig. 9 perspektivisch eine besondere Ausführungsform der Fußstütz- und Sitzträgerfläche für den Kinderwagen nach Fig. 6-8.

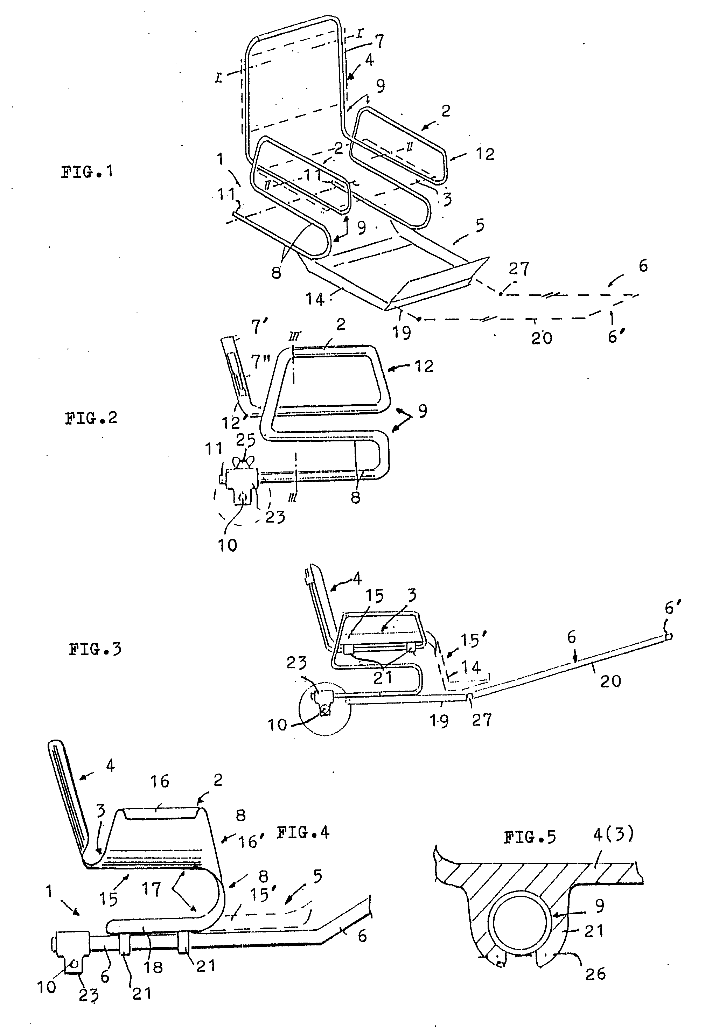

Für alle Ausführungsformen gilt gemeinsam, daß sie aus einem mit einer Radachse 10 versehenen Fahrgestell 1 bestehen, an dem ein Sitz mit einer seitlich von Armstützen 2 und einer Rückenlehne 4 begrenzte Sitzfläche 3 und eine Fußstütze 5 sowie fußstützenseitig eine Deichsel 6 angeordnet sind. Der Kinderwagen nach Fig. 1 ist dabei derart ausgebildet, dar der Rückenlehnenträger 7, die Armstützen 2 und die Radachsträgerteile 8 des Fahrgestelles 1 aus einem im Bereich der Rückenlehne 4 bügelartig, im Bereich der Armstützen 2 schlaufenartig und im Bereich der Radachsträgerteile 8 s-förmig gebogen ausgebildeten einzigen Rohrzug 9 aus begrenzt elastischem Material bestehen. Die Deichsel 6 ist dabei gestellseitig unter der Fußstütze 5 herauslaufend angeordnet wie dies aus Fig. 1 und 3 ohne weiteres ersichtlich ist, d.h. die Deichsel 6, die, wie in Fig. 1 gestrichelt angedeutet, auch in Form eines u-förmigen Bügels mit Längsholmen 20 und einem als Erfassungsende 6' dienenden Querholm ausgebildet sein kann, erstreckt sich von der Sitzfläche 3 nach vorn, so daß ein im Wagen sitzendes Kind der den Wagen ziehenden Person zugewandt ist. Wie aus Fig. 1, 2 ersichtlich, ist dabei der Rohrzug 9 so gebogen und geführt, daß er aus dem Bereich des bügelartig gebogenen Rückenlehnenträgers 7 beidseitig in die Armstützenschlaufen 12 einläuft, außen an den Armstützenschlaufen 12 vorbeiläuft und s-förmig gebogen beidseitig unterhalb der mit den Radachsträgerteilen 8 endet. Diese Rohrzugführung ist insofern besonders vorteilhaft, da dadurch die eigentliche Sitzfläche 3 leicht anzubringen ist. Die Sitzfläche 3 ist in bezug auf die Radachse 10 und das Erfassungsende 6' der Deichsel 6 zwischen diesen kurz vor der Radachse 10 angeordnet. Dadurch ist gewährleistet, daß der Wagen mit dem darin befindlichen Kind nicht nach hinten umschlagen und das Kind auf den Kopf fallen kann.

Durch die Ausbildung des ganzen Fahrgestelles aus einem einzigen Rohrzug 9 wird dem ganzen Fahrgestell eine relativ hohe Elastizität vermittelt, die dem Kinderwagen, ohne daß diesem besondere Federelemente zugeordnet werden müßten, einen guten Federungskomfort vermittelt. Außerdem führt die s-förmige Ausbildung der Radachsträgerteile 8 dazu, daß die Radachse 10 eine ausreichende Distanz zur eigentlichen Sitzfläche 3 hat, wodurch es möglich wird, das zugriffsferne Ende der Deichsel 6 unter der Fußstütze 5 herauslaufend anzuordnen, d.h., der Kinderwagen kann vom be treffenden Kind ohne Behinderung durch die Deichsel 6 problemlos bestiegen und wieder verlassen werden. Die beiden seitlichen Rohrzugstränge 9' können oben im Bereich des Rückenlehnenträgers 7 und im Bereich der Armstützenschlaufen 12' mit einem Querbinder verbunden werden, wobei es sich um angeschweißte, entsprechend lange Rohrstücke handeln kann. Es ist aber auch möglich, Elemente vorzusehen, die nicht unbedingt aus Rohrmaterial od. dgl. gebildet sein müssen. Mit Rücksicht auf eine raumsparende Unterbringbarkeit des Wagens, z.B. im Kofferraum eines PKW's, kann der Rückenlehnenträger 7 als separates Rohrbogenteil 7' ausgebildet sein, deas mit seinen freien Enden 7" in die beiden freien Enden 12' der beiden Armstützenschlaufen 12 einsteckbar ist, wie aus Fig. 2 erkennbar. Da die Radachse 10 durch die s-förmige Ausbildung der Radachsträgerteile 8, in ausreichender Distanz zur Sitzfläche 3 angeordnet ist, kann die Fußstütze 5 in entsprechender Distanz zur Sitzfläche angeordnet und in Form einer Schale 14 ausgebildet werden, die dann am unteren Bereich der Radachsträgerteile 8 des Fahrgestelles angeordnet ist. Auch diese schalenförmig ausgebildete Fußstütze 5 sorgt im unteren Bereich für eine entsprechende Querverstrebung der Radachsträgerteile 8 bzw. des ganzen Fahrgestelles.

Da der Rohrzug 9 im Bereich der Radachsträgerteile 8 mit zwei Enden 11 frei ausläuft, kann auch die Radachse 10 problemlos und mit einfachen Mitteln den Radachsträgerteilen 8 zugeordnet werden. Dafür sind Radachsenhalter 23 vorgesehen, die aus Kunststoff gebildet sein können und die eine Durchgangsbohrung für die Endbereiche 11 des Rohrzuges 9 aufweisen und ferner sich quer dazu erstreckende Durchgriffsbohrungen zur Aufnahme der Radachse 10. In einer Gewindebohrung 24 sitzen Flügelschrauben 25 (siehe Fig. 2), mit denen die Radachsenhalter 23 an den Endbereichen 11 der Radachsträgerteile 8 lösbar fixiert werden können.

Aufgrund der vorbeschriebenen Ausbildung des ganzen Wagengestelles aus einem durchlaufenden und entsprechend gebogenen Rohrzug 9 ist auch die Anbringung der Rückenlehne 4 und der Sitzfläche 3 denkbar einfach. Aus geeignetem Material werden entsprechend breit bemessene Endlosbänder gebildet, die körperseitig abgepolstert sind. Diese hülsenartigen Gebilde können dann einfach vom Rückenlehnenträger 7 aus aufgeschoben und in Position gebracht werden, wobei es durchaus möglich ist, beide Teile zu einem Teil bzw. einer Hülse zusammenzufassen und diese insgesamt aufzuziehen. Voraussetzung für dieses Aufziehen ist dabei, daß die aus den Armstützenschlaufen 12 herauslaufenden Stränge des Rohrzuges 9 außen an den aus dem Rückenlehnenträger 7 in die Armstützenschlaufen 12 einlaufenden Strängen vorbeigeführt sind.

Nach der Ausführungsform gemäß Fig. 3 ist es aber auch möglich, die Sitzfläche 3 und die Rückenlehne 4 in Form zweier Schalen 15 oder auch einer einzigen, entsprechend winelförmigen Schale auszubilden und diese gestellseitig mit am Rohrzug 9 verrastbaren Befestigungselementen 21 gemäß Fig. 5 zu versehen, so daß diese Schale 15 bzw. die entsprechende Rückenlehnenschale und Sitzschale an den betreffenden Bereichen des Rohrzuges 9 durch Aufschnäppen fixiert werden können.

Wie ebenfalls aus Fig. 3 ersichtlich, besteht dabei durchaus die Möglichkeit, die Gesamtschale 15 oder die Sitzflächenschale so auszubilden, daß die Fußstütze 5 als integrales Teil 15' mit angeformt ist, wie dies gestrichelt in Fig. 3 angedeutet ist.

Die Ausführungsform nach Fig. 4 unterscheidet sich von der vorbeschriebenen Ausführungsform insofern, als hierbei unter Beibehaltung des vorteilhaften Federungsprinzipes die Rückenlehne 4, die Sitzfläche 3 und die Radachsträgerteile 8 zu einem einheitlichen Teil zusammengefaßt sind, wobei die Radachsträgerteile 8 einen u-förmigen Bügel 17 bilden, an dessen unteren Schenkel 18 die Radachse 10 und das zugriffsferne Ende 6" der Deichsel 6 angeordnet sind, die auch hier unter der Fußstütze 5 herauslaufend angeordnet ist. Eine derartige Ausbildung setzt ein entsprechendes Formwerkzeug für die Ausbildung dieser Gesamtschale voraus, an der auch, wie aus Fig. 4 ersichtlich, die Fußstütze 5 direkt mit angeformt sein kann. Bei dieser Ausführungsform wird das schalenseitige Teil 19 der Deichsel 6 zweckmäßig in Form einer Gabel ausgebildet, um die kippsichere Anordnung der Gesamtschale gemäß Fig. 4 zu erleichtern und gleichzeitig frei verfügbare Enden 11 für die Anbringung der Radachsenhalter 23, wie vorbeschrieben zu erhalten, sofern die Radachse 10 in dieser Weise an den freien Enden 11 fixiert und angebracht werden soll.

Bei einer Anbringung der Gesamtschale gemäß Fig. 4 am Gabelteil der Deichsel ·6 empfiehlt es sich, die Schnappbefestigungselemente 21 bei 26 zu sichern, damit sich die Gesamtschale unter keinen Umständen vom Gabelteil 19 unerwünscht lösen kann.

Sofern die Sitzfläche 3 schalenartig ausgebildet ist, ist das betreffende Schalenteil (Formstück 16/Schale 15) mit lappenartigen Fortsätzen 16' versehen, die die eigentlichen Armstützen bilden oder die die entsprechenden Rohrstränge der Armstützenschlaufen 12 gemäß Fig. 1, 2 überlappen.

Bei der Ausführungsform gemäß Fig. 4 kann die Gesamtschale ebenfalls zweiteilig im Interesse einer weitgehenden Zerlegbarkeit zwei- oder dreiteilig ausgebildet werden, wobei nur dafür gesorgt werden muß, daß die Teile (Rückenlehne 4, Sitzfläche 3, Radachsträgerteile 8) sicher aber lösbar miteinander verbunden werden können.

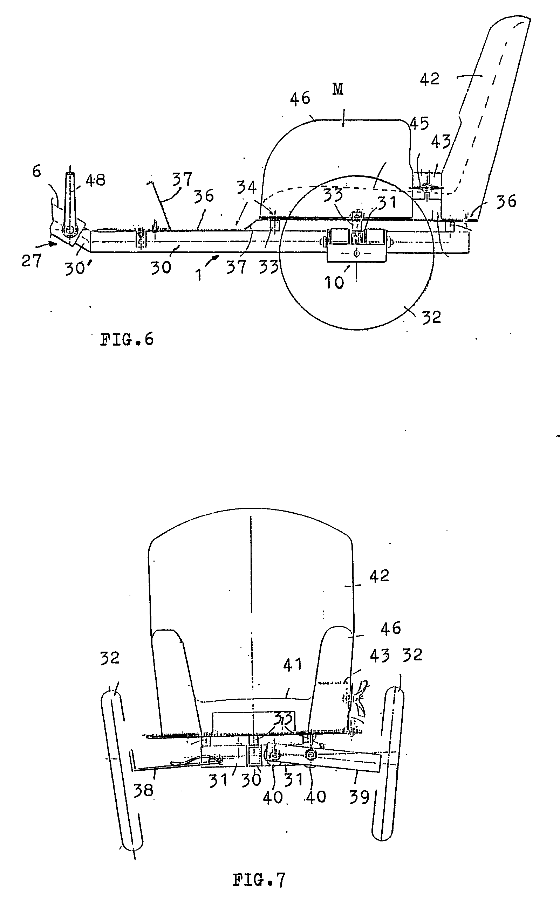

Bei der Ausführungsform des Kinderwagens nach Fig. 6-8 ist wesentlich, daß das Fahrgestell 1 aus Hohlprofilen in Form eines Längsmittelholms 30 mit einem im Bereich der Sitzmitte M angeordneten Querholm 31 besteht, an oder in dem die Radachse 10 für die Räder 32 federnd gelagert ist, wobei auf diesem Fahrgestell 1 mit mindestens drei Stützelementen 33 die Fußstütz- und Sitztragfläche 34 gelagert ist. Der Längsmittelholm 30 und der Querholm 31 sind dabei aus Leichtmetallvierkantprofilen gebildet. Um den Sitzträgerteil 35 auch an seinem hinteren Rand 36 mit einem Stützelement 32 lagern zu können, ist der Längsmittelholm 30 über den Querholm 33 hinaus bis unter den hinteren Rand 36 der Tragfläche 34 erstreckt. Die als einfache und handelsübliche Schwingmetallelemente ausgebildeten Stützelemente 33 sind ferner an den Enden des Querholms 31 angeordnet. Wie dargestellt, kann ein weiteres Stützelement 34 auch unter dem vorderen Randbereich des Sitzträgerteiles 35 vorgesehen werden, zwingend notwendig ist dies jedoch nicht, da das Fußstützteil 36 unmittelbar auf dem Längsmittelholm 30 aufliegt. Die Tragfläche 34 hat einen denkbar einfachen Zuschnitt und ist, wie aus Fig. 1 ersichtlich, lediglich im mittleren Bereich mit einer Abkröpfung 37 zu versehen, wenn die Erstreckungsebene des Sitzträgerteiles 35 höher liegen soll als die des Fußstützteiles 36. In Rücksicht auf unterschiedliche Beinlängen ist am Fußstützteil 36 abstandseinstellbar zum Sitzflächenteil 35 eine Fußwiderlagerfläche 37 angeordnet.

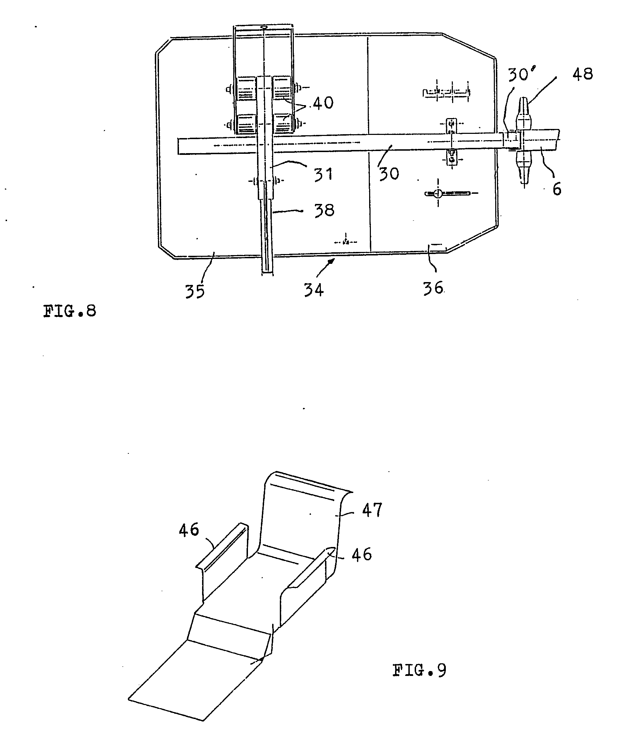

Abgesehen davon, daß die elastischen Stützelemente 34 schon einen gewissen Federungskomfort gewährleisten, ist nun - wie aus Fig. 7 ersichtlich - der starr mit dem Längsmittelholm 30 verbundene Querholm 31 zur Ausbildung einer federnden Radachse mit herangezogen. In Fig. 6, 7 sind dabei gleichzeitig zwei Ausführungs formen in Form von Schwingachsen dargestellt. Bei der Ausführungsform links in Fig. 7 ist im Querholm 31 einfach ein blattfederbelasteter Hebel 38 gelenkig gelagert an dessen äußerem Ende dann in geeigneter Weise das Rad 32 drehbar gelagert ist. Die etwas aufwendigere Schwingachsenausbildung ist rechts in Fig. 7 dargestellt und besteht aus einem bügelartigen Achsschenkel 39, zwischen dem und dem Querholm 31, wie besser aus Fig. 8 ersichtlich, Schwingmetallelemente 40 angeordnet sind.

Um einen komplett aus Sitzfläche 41 und Rückenlehne 42 bestehenden Kindersitz auf dem vorbeschriebenen Fahrgestell 1 bzw. dem Sitzträgerteil 35 lösbar anordnen zü können, ist an den beiden Längsseiten der Tragfläche 34 je ein Sitzhalter 43 vorgesehen. Dieser Sitzhalter 43 besteht aus einer am Sitzträgerteil 35 angeordneten Lasche 44, an der mittels einer Flügelmutter 45 lösbar gehalten, der eigentliche Sitzhalter 43 befestigt ist, mit dem der Kindersitz auf dem Sitzträgerteil 35 gehalten wird. Ausgenutzt ist dabei die an solchen Kindersitzen in der Regel vor handene Ausnehmung zwischen den Armstützen 4 und der Rückenlehne 43, die bei Anordnung eines solchen Kindersitzes auf dem Rücksitz eines PKW's zur Aufnahme von Gurtführungen dient. Abgesehen von dieser Ausführungsform kann aber auch die Tragfläche 34 im Sinne der Fig. 9 ausgebildet werden, wobei die Tragfläche 34 am hinteren Rand nach oben abgeknickt verlängertals Lehnenhalter 47 ausgebildet und ferner die Tragfläche 34 im Sitzbereich beidseitig nach oben abgeknickt mit Armstützen 46 bildenden Verlängerungen versehen ist. Auf bzw. an dieser sitzschalenartig ausgebildeten Tragfläche 34 sind dann lediglich noch in geeigneter Weise Sitz- und Rückenlehnenpolster anzubringen.

In vorteilhafter Weiterbildung ist der Längsmittelholm 30 zur Ausbildung der Wagendeichsel 6 nicht einfach entsprechend lang gehalten, was einerseits der geforderten einfachen Fertigungshandhabung zuwiderliefe und andererseits die Mitführung eines solchen Wagens bspw. in einem PKW erschweren würde, sondern die Deichsel 6 ist dem vorderen Ende des Längsmittelholmes 30 lösbar zugeordnet, und zwar bevorzugt neigungseinstellbar, was keiner besonderen Erläuterung bzw. Darstellung bedarf, da dafür geeignete Mittel und Gestaltungen ohne weiteres zur Verfügung stehen, um mit dem Hebel 48 die Deichsel 6 in gewünschter Neigungsorientierung abgeknickten Ende 30′ des Längsmittelholmes 30 fixieren zu können.

## Ansprüche

1. Kinderwagen, bestehend aus einem mit einer Radachse versehenen Fahrgestell, an dem ein Sitz mit einer seitlich von Armstützen und einer Rückenlehne begrenzten Sitzfläche und eine Fußstütze sowie fußstützenseitig eine Deichsel angeordnet sind,
**dadurch gekennzeichnet,**
daß die stab- oder bügelförmige Deichsel (6) des Fahrgestelles (1) sowohl unter der Sitz- als auch der Fußstützenauflagefläche 3, 5; 35, 36) herauslaufend und zugseitig vor der Fußstützfläche (5, 36) nach oben zum Handführungsgriff (6′) abgewinkelt ausgebildet ist, und daß das Fahrgestell (1) in sich direkt federnd oder mit abgefederten Teilen unterhalb der Sitzfläche (3, 11) versehen ist, an denen die Räder (32) drehbar gelagert sind.

2. Kinderwagen nach Anspruch 1,
**dadurch gekennzeichnet,**
daß der Rückenlehnenträger (7), die Armstützen (2) und die Radachsträgerteile (8) des Fahrgestelles (1) aus einem im Bereich der Rückenlehne (4) bügelartig im Bereich der Armstützen (2) schlaufenartig und im Bereich der Radachsträgerteile (8) s-förmig gebogenen, begrenzt elastischen Rohrzug (9) gebildet sind, wobei die Sitzfläche (3) in bezug auf die Radachse (10) und das Erfassungsende (6′) der Deichsel (6) zwischen diesen kurz vor der Radachse (10) angeordnet ist.

3. Kinderwagen nach Anspruch 1 oder 2,
**dadurch gekennzeichnet,**
daß der Rückenlehnenträger (7) als separates Rohrbogenteil (7′) ausgebildet und dieser mit seine Enden (7″) an den beiden freien Enden (12′) der beiden Armstützenschlaufen (12) ein- oder aufgesteckt ist.

4. Kinderwagen nach Anspruch 1,
**dadurch gekennzeichnet,**
daß die Radachsträgerteile (8) des Fahrgestelles (1), die Sitzfläche (3) mit Armstützen (2) und die Rückenlehne (4) aus einem begrenzt elastischen Formstück (16′) gebildet sind, wobei Sitzfläche (3) und Radachsträgerteile (8) einen u-förmigen Bügel (17) bilden, an dessen unterem Schenkel (18) die Radachse (10) und das zugriffsferne Ende (6″) der stab- oder bügelförmigen Deichsel (6) angeordnet sind.

5. Kinderwagen nach Anspruch 1,
**dadurch gekennzeichnet,**
daß das Fahrgestell (1) aus Hohlprofilen, vorzugsweise aus Vierkantprofilen, in Form eines mit Deichselanschlußende (30′) versehenen Längsmittelholms (30) mit einem im Bereich der Sitzmitte (M) angeordneten Querholm (31) gebildet ist, an oder in dem die Radachse (10) federnd gelagert ist, und daß auf dem Fahrgestell (1) auf mindestens drei Stützelementen (33), vorzugsweise federnd ausgebildete Stützelemente, die Fußstütz- und Sitztragfläche (34) gelagert ist.

6. Kinderwagen nach Anspruch 5,
**dadurch gekennzeichnet,**
daß sich der Längsmittelholm (30) über den Querholm (31) hinaus bis unter den hinteren Rand (36) der Tragfläche (34) erstreckt.

7. Kinderwagen nach einem der Ansprüche 1 bis 3,
**dadurch gekennzeichnet,**
daß der Querholm (31) einen Teil der Radachse (10) bildet, an deren Holmteilen je ein abgefedertes Schwingachsenteil (38, 39) angeordnet ist.

8. Kinderwagen nach einem der Ansprüche 5 bis 7,
**dadurch gekennzeichnet,**
daß die Tragfläche (34) zwischen Sitzträgerteil und Fußstützteil (39, 36) mit einer Abkröpfung (37) derart versehen ist, daß sich das Sitzträgerteil (39) in einer höher gelegenen Ebene als das Fußauflageteil (36) erstreckt.

9. Kinderwagen nach einem der Ansprüche 5 bis 8,
**dadurch gekennzeichnet,**
daß an den beiden Längsseiten der Tragfläche (34) mindestens je ein Sitzhalter (43) lösbar angeordnet ist.

10. Kinderwagen nach einem der Ansprüche 1 bis 9,
**dadurch gekennzeichnet,**
daß die Deichsel (6) zweiteilig ausgebildet ist und die beiden Teile lös- und/oder klappbar durch ein in unterschiedlichen Winkelstellungen fixierbares Gelenk (27) miteinander verbunden sind.

FIG.1

FIG.2

FIG.3

FIG.4

FIG.5

FIG.6

FIG.7

FIG.8

FIG.9